# EUROPEAN PATENT SPECIFICATION

(11) **EP 1 864 569 B1**
(45) Date of publication and mention of the grant of the patent: **24.02.2010**
(21) Application number: 07425333.7
(22) Date of filing: 01.06.2007
(51) Int. Cl.: A01G 9/22, A01G 9/24

(54) **Opening and closure system of the plastic film and/or net covering the roof of metallic greenhouses**
Öffnungs- und Schließsystem der Plastikfolie und/oder Netzabdeckung für das Dach eines metallischen Gewächshauses
Système d'ouverture et de fermeture du film plastique et/ou du filet recouvrant le toit des serres métalliques

(30) Priority: 06.06.2006 IT PA20060032
(43) Date of publication of application: 12.12.2007
(73) Proprietor: Scrofani, Orazio, 90142 Palermo (IT)
(72) Inventor: Scrofani, Orazio, 90142 Palermo (IT)
(74) Representative: Iannone, Carlo Luigi

(56) References cited:
- WO-A-00/08918
- WO-A-00/60192
- WO-A-98/14672
- WO-A-2004/011760
- FR-A- 2 672 333
- FR-A1- 2 431 827

## Description

The present invention relates to a complete opening and closure system of the plastic film and/or net covering the roof of metallic greenhouses, said system deploying and storing the covering plastic film and/or net.

More specifically, the invention relates to a system of the above kind permitting very easily opening the roof of metallic greenhouses, replacing it when necessary with an anti-aphid or anti-hail or shadowing net.

As it is well known, in summer and even during the sunny winter days, there is the problem of ventilating at most greenhouse in order to prevent temperature and humidity rising. Further, in many cases it is necessary maintaining the greenhouses protected preventing entrance of insects or of hail or of too much sun.

It is also known that different solutions exist permitting opening and closing plastic film covering metallic greenhouses but at present no solution exists permitting replacing the film with a net opening as well. Known solutions opening only the plastic film provide winding plastic sheet around a tube or roll, usually having a diameter of 60 mm. Roll can be fix and provided on gutter, or it can be movable. However, none of the known solutions can give a suitable solution to this kind of operation, mainly under the economic point of view.

Particularly, a problem is that the plastic sheet must be always maintained tensioned, all along its extension, both during opening and closure. Another relevant problem to be solved is the different angular rotation speed of the roll on which the sheet is wound, varying its diameter due to the portion of wound sheet, said variation being even irregular since film thickness is not uniform due to folds or wrinkles, also causing an irregular advancement of sheet.

In view of the above, the Applicant has realised a technical solution permitting obviating the above mentioned drawbacks, suggesting a very simple and functional complete opening and closure system of the roof of metallic greenhouses provided with a plastic material covering.

WO-A-98/14672 describes a solution according to the precharacterising portion of claim 1 of the present application.

Innovative solution according to the invention is defined in the characterising portion of claim 1.

Other embodiments of the solution according to the present invention are defined in the dependent claims.

The present invention will be now described, for illustrative but not limitative purposes, according to its preferred embodiments, with particular reference to the figures of the enclosed drawings, wherein:
figure 1 is a schematic view of a greenhouse;
figure 2 shows a particular of a system according to the invention;
figures 3a and 3b show two embodiments of a system according to the invention;
figure 4 shows an embodiment of a system according to the invention for connection of film to net or strips;
figure 5 shows another embodiment of the system according to the invention; and
figure 6 shows a particular of the embodiment of figure 5.

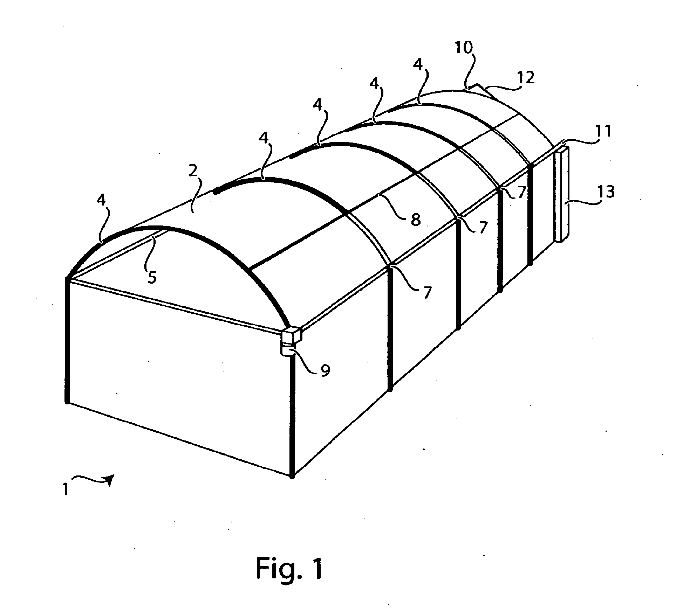

More specifically, and making reference to figure 1, the invention concerns a complete opening and closure system of the roof of metallic greenhouses 1, provided with a plastic film 2 and/or anti-aphid or anti-hail or shadowing net 3 covering, said greenhouse 1 comprising at least an aisle, each aisle providing a plurality of arches 4 supporting the film 2, with the central ridge raised with respect to the lateral parts, said system comprising two gutters providing, instead of the standard sheet-pulling tubes, robust rolls 5, rotating within suitable supports 7 provided close to the gutter (in the following gutter meaning the lateral and low part of the arch where usually gutters are provided for collecting water, and that in this case could be not provided). Film 2 is wound about one of the rolls 5, while in the other roll (not shown) it is wound an anti-aphid or anti-hail or shadowing net, or pulling strips or cables. Film 2 and net or strips are connected each other longitudinally along the greenhouse by double sheet-fixing devices 8, sliding on arches 4 from a gutter to the other, rotation of the two rolls according to a direction winding the film 2 and unwinding net 3 or strips, net and strips replacing the film, in the opposite direction, operation occurring by a single ratiomotor 9 provided at the end of one 6 of the two rolls, ends 10, 11 of the rolls 5, 6 on the other part of the greenhouse projecting from the same so that a connection cable 12 can be wound or unwound on the same, directly or by pulleys, along said cable 12 being interposed a system, that will be described in the following, compensating the different angular speeds of the rolls 5, 6, in order to solve the problem of their different and irregular rotation speed, by presence of a counterweight, vertically moving within a container 13.

Preferably, according to the invention, said winding rolls 5, respectively for the film 2 and the net, are comprised of metallic shafts.

In case greenhouse is very long, it is possible easily placing a second ratiomotor on the second end of the greenhouse, always acting on the same roll.

Always according to the invention, and with reference to figure 1, said gutter rolls 5 rotate about fixed bearings provided in correspondence of the two ends of the greenhouse.

Still according to the invention, stops are provided on gutters in order to stop double sheet-fixing device when it reaches this position.

Furthermore, according to the invention, fixed nets, such as anti-hail nets or nets comprised of different material, or wires or metallic tubes, or other kind of tubes, are provided on the two ends of the first two arches, o as film or net placed above can be suitably supported at their ends along the longitudinal direction.

Furthermore, according to the invention, fixed nets are provided at the ends of the first two arches, above movable film and/or net, so as to maintain them always adhering the greenhouse roof even in case of strong wind, being in any case maintained their possibility of sliding.

Placing a film on one of the gutter rolls and an anti-aphid or anti-hail or shadowing net on the other one of the two gutter rolls, it is obtained a protection against aphids, hail or sun when the film is opened; while if a net with wide mesh or very strong strips or pulling cables are provided on the second roll, it is simply obtained opening of the film and thus the maximum ventilation of greenhouse. In case strips or cable are installed, it is also necessary providing longitudinal connections between arches, beside the structural one usually provided at the ridge, so that strips or cavetti can be guided along a curvilinear path almost parallel to the arches. Said connections can be realised by light tubes or even with zinc plated metallic wires or cables.

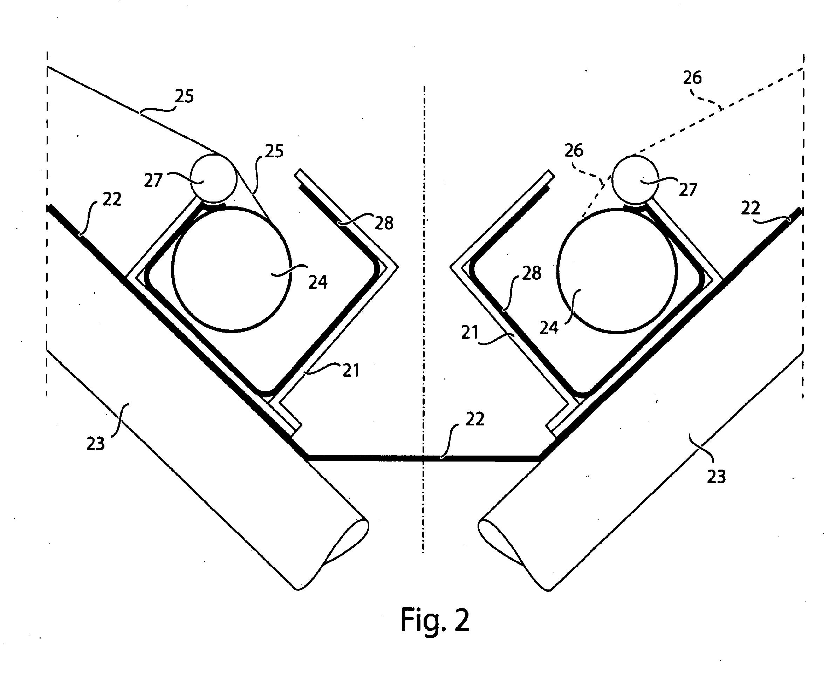

Figure 2 shows the central gutter of a greenhouse with a plurality of aisles, with supports 21 within gutter 22 on each of arches 23 of the aisles, within which supports rolls 5 rotates, with film and net well tightened on arches thanks to tubes 27 all along greenhouse, a Teflon^{®} strip 28, or a strip comprised of a different material, being interposed between inner part of the support and the roll film or net, in order to reduce resistance against the motion.

In case pulling strips 25, 26 are installed on one of the two rolls 24, in place of a continuous film or net, roll 24 can have a smaller diameter, and it can rotate about simple stands replacing the special support 21, and it is no more necessary employing the continuous tube all along the greenhouse extension.

If pulling strips 25 or 26 are provided in one of the two rolls 24 instead of a continuous net or film, roll 24 can have a smaller diameter, rotating about simple stands replacing the special support 21 and it is no more necessary using continuous tube all along the greenhouse extension.

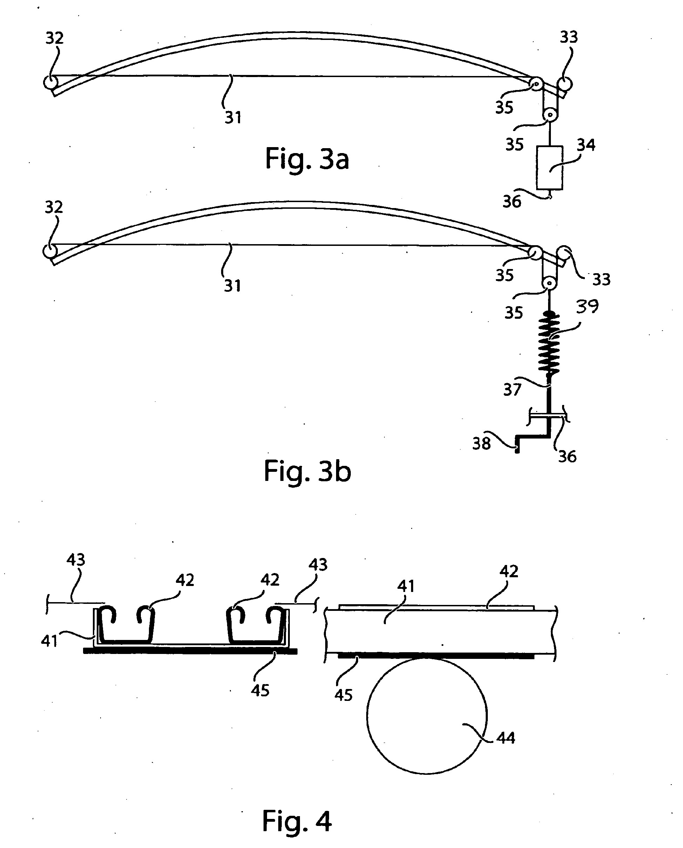

Figure 3a shows the end opposed with respect to the ratiomotor, rolls 32, 33 on gutters being connected each other, directly or by pulleys keyed on rolls 32, 33 by a steel, or different material, wire or strip that, thanks to pulleys 35 and weight 34, is maintained under tension in order to always transmit the motion, but being it possible shortening or lengthening the same by the ascent or descent of the weight, respectively: Substantially, by wire 31 or strip or belt it is created a transmission chain that, starting from the roll 32 with the ratiomotor on the opposite end, passes through wire 31, then to the roll 33 to gutter, and then to film and net not shown in the figure, but wound respectively about rolls 33 or 32, or vice versa, and then back to the ridge roll. Said transmission chain or belt, even acting without interruption, can vary its length thanks to the vertical weight 34 obtained by pulleys 35, to conform to the rotation irregularities of the two rolls. Counterweight further has a hook 36 in its lower part in order to increase tensioning adding further weights or in a different way, if it is wished increasing film tension, for example with strong wind and/or in case greenhouse must be elongated using further arches. Vertical motion of counterweight 34 is realised for safety reasons within the tube 12 of figure 1.

In case a strip or band is used in place of the wire 31, its winding about the pulley creates a variation of the diameter compensating variation of diameter of film or net thus reducing weight excursion.

Observing figure 3b, weight is replaced by a spring 39 fixed to the structure 36 of greenhouse by a threaded rod 7 that, thanks to the handle 38, can increase or reduce the stress by which wire 31 or strip or band is maintained under tension, thus adjusting covering of the greenhouse roof. Further, it is possible varying also automatically tension of film, replacing handle by a small ratiomotor.

Spring 39 of figure 3b or weight 34 of figure 3a can be replaced by a compressed air jack actuated by a small compressor of the kind available on the market, or by another system maintaining tension but permitting variation of length.

Said systems further permit maintaining film and/or net and/or strips tensioned along the direction transverse with respect to the greenhouse, also automatically compensating width variations due to dilatation caused by sunrays or more generally by temperature variations. Film length variation, i.e. according to the longitudinal direction of greenhouse, are automatically compensated by folds and wrinkles formed on the winding roll.

Rather then applying ratiomotor directly on the driving roll shaft, it is provided the possibility of introducing between them a chain transmission, or another type of transmission, with a set reduction ratio, so as to reduce ratiomotor power, even if increasing the actuation time, or to be able replacing ratiomotor with a handle permitting a manual operation useful in case of lack of power supply. In case a similar transmission with a handle is installed also on the other gutter roll, in the same testate or in the opposite one, it would be possible tensioning film much more strongly, e.g. when wind is strong, and this is valid either in case ratiomotor is provided in the other roll, and in case only chain transmission is provided. In the last case, with two handles and without ratiomotor, only a manual operation would exist, indispensable if greenhouse has not electric power supply, thus saving wire or strip and counterweight or spring transmission, as well as electric system.

Figure 4 shows a preferred but not exclusive embodiment for connection of film to net or strips, employing a U shaped section bar 41 within which two standard sheet-fixing devices 42 are provided on both sides, all along greenhouse extension in order to lock film 43 or net. U shaped section bar proceeds along arch 44, by interposition of a Teflon^{®}, nylon or other material strip 45 in order to reduce dragging against motion and preventing direct slipping of the two arch and sheet-fixing device metals.

Fixing of film, nets or strips at two sheet-fixing devices 42 and their winding about the relevant rolls at gutter is a quite simple operation that agriculture can complete by him/herself, thus choosing the most suitable combination for his/her needing or renewing film, nets or strips when necessary.

Film and net can be connected each other by a gluing carried out by heating or special glues, rather than with the section bar shown in figure 4.

Thus it would be possible, coupling a kind of net (e.g. an anti-aphid net) on one side and another kind of net (e.g. a shadowing or large mesh or anti-hail net), winding all together a net along with the film, thus obtaining at the same time: film and anti-aphid net, file and shadowing net, etc. thus, agriculture would have different choices, without carrying out dismounting or replacement operations.

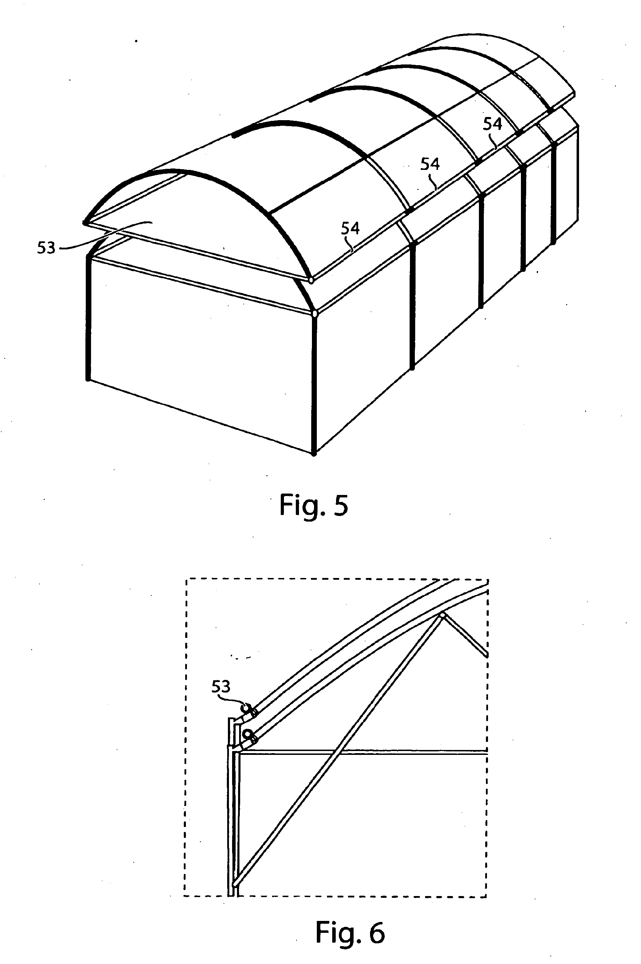

As shown in figure 5, other two rolls 53, 54 can be juxtaposed on rolls 1, 2 on gutter shown in figure 1, said rolls 53, 54 being provided with independent operation, thanks to a structure shown in figure 6, so as to mount a second film on roll 53 and pulling strips or wires, or vice versa, in order to realise the double covering of greenhouse that in this case, with respect to the traditional one, has the advantage of being operable only during the night when it is colder thus permitting during the day a higher light inlet within greenhouse and at the same time protecting this second film against ultraviolet rays, thus increasing its duration. Otherwise, a shadowing net can be mounted on roll 53 and pulling strips or wires on roll 54, or vice versa, in order to realise a variable shadowing. Otherwise, it is possible mounting a film on roll 53 and a shadowing net on roll 54, or vice versa, in order to realise at the same time double film and variable shadowing.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Complete opening and closure system (1) of metallic greenhouse roof provided with a plastic film (2) covering and/or with anti-aphid or anti-hail or shadowing net (3), said greenhouses comprising at least one aisle, each aisle providing a plurality of film support arches (4) with a central ridge raised with respect to the lateral ridges, said system comprising two gutters which provide robust rolls (5), instead of the standard fixed film pulling devices, said rolls (5) rotating within suitable robust support (7) placed in correspondence of the gutters **characterised in that** the film (2) is wound about one of the two rolls (5), and an anti-aphid or anti-hail or shadowing net (3), or pulling strips or wires, is wound on the other roll (5), said film and net or strips being coupled each other longitudinally along the greenhouse by an element sliding on arches (4) between the gutters, rotation of the two rolls (5) according to a first direction winding film (2) and unwinding net or strips, said net or strips replacing the film (2), and the opposite effect occurring by the rotation according to the second direction.

2. Complete opening and closure system (1) of metallic greenhouse roof provided with a plastic film (2) covering and/or with anti-aphid or anti-hail or shadowing net (3) according to the preceding claim, **characterised in that** it is operated by a single ratiomotor (9) provided on the end of one of the two rolls (5), the two ends of the rolls (5) on the other testate projecting from the same so that a wire (12) can be wound or unwound, directly or by pulleys, said wire (12) transmitting the motion acting along with film and strip or net thus creating a transmission chain or belt, and **characterised in that** its length can be varied automatically, always maintaining the required tension, thanks to the vertical motion of a counterweight, obtained by small pulleys, in order to conform to rotation irregularities of the two rolls (5), said counterweight being eventually provided with a lower hook in order to add further weights in case it is wished increased film tension.

3. Complete opening and closure system (1) of metallic greenhouse roof provided with a plastic film (2) covering and/or with anti-aphid or anti-hail or shadowing net (3) according to the preceding claim, **characterised in that** variation of wire (12) transmission length is obtained by a spring (34) fixed to the greenhouse structure by a threaded rod that, thanks to a handle (38) can increase or reduce stress by which wire is kept under tension, thus adjusting tension of greenhouse roof covering, being further possible modifying film tension automatically providing a small ratiomotor instead of the handle.

4. Complete opening and closure system of metallic greenhouse roof provided with a plastic film covering and/or with anti-aphid or anti-hail or shadowing net according to the preceding claim, **characterised in that** variation of wire transmission length is obtained by placing a compressed air jack, or another kind of jack, or another system maintaining wire tension and permitting its lengthening.

5. Complete opening and closure system of metallic greenhouse roof provided with a plastic film covering and/or with anti-aphid or anti-hail or shadowing net according to the preceding claims, **characterised in that** a second ratiomotor is provided for very long greenhouses on the opposite end of the same greenhouse with respect to the first ratiomotor, always acting on the same roll of the first ratiomotor.

6. Complete opening and closure system of metallic greenhouse roof provided with a plastic film covering and/or with anti-aphid or anti-hail or shadowing net according to the preceding claims, **characterised in that** fixed anti-hail nets, or other kind of net, or wires or metallic tubes, or tubes comprised of different material are provided on the ends of the first two arches, provided in such a way that film or net above the same can have the necessary support at the ends along the longitudinal direction during its motion, and **in that** fixed nets are placed at the ends of the first two arches, above the film and/or movable nets, so that they are maintained always adhering the greenhouse roof even in presence of strong wind, being always permitted their sliding.

7. Complete opening and closure system of metallic greenhouse roof provided with a plastic film covering and/or with anti-aphid or anti-hail or shadowing net according to the preceding claims, **characterised in that** film or nets or strips are connected each other by a stiffening U shaped section bar provided inside on both parts with a standard sheet fixing device all along the length of the greenhouse in order to lock film and net and strips.

8. Complete opening and closure system of metallic greenhouse roof provided with a plastic film covering and/or with anti-aphid or anti-hail or shadowing net according to the preceding claims, **characterised in that** film and net or strips are connected each other by a simple gluing obtained by heating or special glues.

9. Complete opening and closure system of metallic greenhouse roof provided with a plastic film covering and/or with anti-aphid or anti-hail or shadowing net according to the preceding claims, **characterised in that** a chain transmission, or another kind of transmission, with a set reduction ratio, is provided between drive roll and ratiomotor, so as to reduce ratiomotor power, but increasing the operation time, and to be able replacing the ratiomotor with a handle permitting a manual operation useful in case of main power failure.

10. Complete opening and closure system of metallic greenhouse roof provided with a plastic film covering and/or with anti-aphid or anti-hail or shadowing net according to the preceding claims, **characterised in that** besides the handle described in claim 9, it is provided a second handle on the other gutter roll, at the same end or at the opposite end, in order to be able much more strongly tensioning the film, in presence of strong wind, both in case the other roll provides the ratiomotor and in case only the manual transmission is provided.

11. Complete opening and closure system of metallic greenhouse roof provided with a plastic film covering and/or with anti-aphid or anti-hail or shadowing net according to the preceding claims, **characterised in that** two further rolls are juxtaposed on the two gutter rolls, thanks to a structure provided above, having an independent operation, so as to mount, for example, in one of them a second film and in the other one pulling strips or wires, or vice versa, thus realising a double covering of greenhouse, or to mount a shadowing net on one roll and pulling strips or wires on the other roll, or vice versa, in order to realise a variable shadowing, or to mount a film on one roll and a shadowing net on the other roll, or vice versa, in order to realise at the same time double film and variable shadowing.

## Patentansprüche

1. Vollständig öffenbares und schließbares System (1) eines metallischen Gewächshausdachs, bereitgestellt mit einer Kunststoff-Folien- (2) Bedeckung und/oder mit einem Anti-Aphid- oder einem Anti-Hagel- oder einem Abschatt-Netz (3), wobei das Gewächshaus zumindest einen Gang aufweist, wobei jeder Gang eine Vielzahl von Folienhaltebögen (4) mit einem zentralen Höhenzug, angehoben bezüglich der lateralen Höhenzüge, bereitstellt, wobei das System zwei Rinnen umfasst, die robuste Rollen (5) bereitstellen, anstelle der standardmäßigen fixierten Folienziehvorrichtungen, wobei die Rollen (5) drehbar sind in einer geeigneten robusten Halterung (7), platziert in Übereinstimmung mit den Rinnen, **dadurch gekennzeichnet, dass** die Folie (2) um eine der zwei Rollen (5) gewickelt ist und ein Anti-Aphid- oder Anti-Hagel- oder Abschatt-Netz (3) oder Zieh-Streifen oder Seile an der anderen Rolle (5) gewickelt ist, wobei Folie und Netz oder Streifen gegenseitig gekoppelt sind längs entlang des Gewächshauses durch ein Element, schiebbar an Bögen (4) zwischen den Rinnen, wobei eine Drehung der zwei Rollen (5) gemäß einer ersten Richtung Folie (2) aufwickelt und Netz oder Streifen abwickelt, wobei Netz oder Streifen die Folie (2) ersetzen, und der entgegengesetzte Effekt eintritt durch Drehung gemäß der zweiten Richtung.

2. Vollständig öffenbares und schließbares System (1) eines metallischen Gewächshausdaches, bereitgestellt mit einer Kunststoff-Folien-(2) Bedeckung und/oder mit einem Anti-Aphid- oder einem Anti-Hagel- oder einem Abschatt-Netz (3) gemäß dem vorigen Anspruch, **dadurch gekennzeichnet, dass** es betätigt wird durch einen Einzel-Ratio-Motor (9), bereitgestellt an dem Ende von einer der zwei Rollen (5), wobei die zwei Enden der Rollen (5) an dem anderen Abschnitt vom Gleichen vorspringen, so dass ein Seil (12) aufgewickelt oder abgewickelt werden kann, direkt oder mittels Rollenscheiben, wobei das Seil (12) die Bewegung überträgt, wirkend einhergehend mit Folie und Streifen oder Netz, wodurch eine Transmissions-Kette oder Band erzeugt wird, und **dadurch gekennzeichnet, dass** dessen Länge automatisch variiert werden kann, immer haltend die erforderliche Spannung, dank der Vertikalbewegung eines Gegengewichts, erhalten durch kleine Rollenscheiben, um konform zu sein mit Drehungregelmäßigkeiten der zwei Rollen (5), wobei das Gegengewicht schließlich bereitgestellt ist mit einem unteren Haken, um weitere Gewichte hinzuzufügen, im Fall, dass eine erhöhte Folienspannung erwünscht ist.

3. Vollständig öffenbares und schließbares System (1) eines metallischen Gewächshausdaches, bereitgestellt mit einer Kunststoff-Folien-(2) Bedeckung und/oder mit einem Anti-Aphid- oder einem Anti-Hagel- oder einem Abschatt-Netz (3) gemäß dem vorigen Anspruch, **dadurch gekennzeichnet, dass** eine Variation der Seil- (12) Transmissionslänge erhalten wird durch eine Feder (34), befestigt an der Gewächshausstruktur mittels eines Gewindestabs, der dank eines Griffs (38) die Beaufschlagung erhöhen oder reduzieren kann, durch die das Seil unter Spannung gehalten wird, wodurch die Spannung der Gewächshausdachbedeckung eingestellt wird, wobei ferner ein Modifizieren der Folienspannung automatisch unter Bereitstellung eines kleinen Ratio-Motors anstelle des Griffs möglich ist.

4. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß dem vorigen Anspruch, **dadurch gekennzeichnet, dass** eine Variation der Seiltransmissionslänge erhalten wird durch Platzieren einer Kompressions-Luft-Hubeinrichtung oder einer anderen Art von Hubeinrichtung oder einem anderen System, haltend die Seilspannung und erlaubend deren Verlängerung.

5. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß den vorigen Ansprüchen, **dadurch gekennzeichnet, dass** ein zweiter Ratio-Motor bereitgestellt ist für sehr lange Gewächshäuser an dem gegenüberliegenden Ende des gleichen Gewächshauses bezüglich dem ersten Ratio-Motor, immer wirkend auf die gleiche Rolle des ersten Ratio-Motors.

6. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß den vorigen Ansprüchen, **dadurch gekennzeichnet, dass** befestigte Anti-Hagel-Netze oder eine andere Art von Netz oder Seile oder metallische Röhren oder Röhren, bestehend aus unterschiedlichem Material, bereitgestellt sind an den Enden der ersten zwei Bögen, bereitgestellt auf solch eine Art und Weise, dass Folie oder Netz über dem Gleichen die erforderliche Halterung aufweisen kann an den Enden entlang der Längsrichtung während seiner Bewegung und **dadurch**, dass befestigte Netze platziert sind an den Enden der ersten zwei Bögen, über der Folie und/oder beweglichen Netzen, so dass sie gehalten werden immer anhaftend an dem Gewächshausdach selbst bei Vorhandensein von starkem Wind, wobei ihr Verschieben immer ermöglicht ist.

7. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß den vorigen Ansprüchen, **dadurch gekennzeichnet, dass** Folie oder Netze oder Streifen gegenseitig verbunden sind durch einen aussteifenden U-förmigen-Querschnitts-Balken, bereitgestellt innenseitig an beiden Teilen mit einer standardmäßigen Bahnbefestigungsvorrichtung gänzlich entlang der Länge des Gewächshauses, um Folie und Netz und Streifen festzumachen.

8. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß den vorigen Ansprüchen, **dadurch gekennzeichnet, dass** Folie und Netz oder Streifen gegenseitig verbunden sind durch eine einfache Verklebung, erhalten durch Erwärmen oder Spezialkleber.

9. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß den vorigen Ansprüchen, **dadurch gekennzeichnet, dass** eine Kettentransmission oder eine andere Art von Transmission mit eingestelltem Reduktions-Verhältnis bereitgestellt ist zwischen Antriebsrolle und Ratio-Motor, um Ratio-Motor-Leistung zu reduzieren, jedoch die Betriebszeit zu erhöhen, und um in der Lage zu sein, den Ratio-Motor mit einem Griff zu ersetzen, ermöglichend einen manuellen Betrieb, nützlich im Fall eines Hauptleistungsversagens.

10. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß den vorigen Ansprüchen, **dadurch gekennzeichnet, dass** neben dem Griff, beschrieben in Anspruch 9, ein zweiter Griff bereitgestellt ist an der anderen Rinnenrolle, an dem gleichen Ende oder an dem gegenüberliegenden Ende, um in der Lage zu sein, die Folie deutlich stärker zu spannen, bei Vorhandensein von starkem Wind, sowohl im Fall, dass die andere Rolle den Ratio-Motor bereitstellt, und im Fall, dass nur die manuelle Transmission bereitgestellt ist.

11. Vollständig öffenbares und schließbares System eines metallischen Gewächshausdaches, bereitgestellt mit einer Kunststoff-Folien-Bedeckung und/oder mit einem Anti-Aphid- oder einem Anti-Hagel- oder einem Abschatt-Netz gemäß den vorigen Ansprüchen, **dadurch gekennzeichnet, dass** zwei weitere Rollen nebeneinander angeordnet sind an den zwei Rinnenrollen, dank einer Struktur, bereitgestellt darüber, aufweisend einen unabhängigen Betrieb, um beispielsweise in einem von diesen eine zweite Folie und in dem anderen Zieh-Streifen oder Seile oder umgekehrt zu montieren, wodurch eine Doppelbedeckung des Gewächshauses realisiert wird, oder um ein Abschatt-Netz an einer Rolle und Zieh-Streifen oder Seile an der anderen Rolle oder umgekehrt zu montieren, um eine variable Abschattung zu realisieren, oder um eine Folie an einer Rolle und ein Abschatt-Netz an der anderen Rolle oder umgekehrt zu montieren, um gleichzeitig eine Doppelfolie und ein variables Abschatten zu realisieren.

## Revendications

1. Système d'ouverture et de fermeture complètes (1) d'un toit de serre métallique muni d'un recouvrement en film plastique (2) et/ou d'un filet anti-pucerons ou anti-grêle ou faisant de l'ombre (3), lesdites serres comprenant au moins un couloir, chaque couloir fournissant une pluralité d'arceaux de support de film (4) avec une nervure centrale dressée par rapport aux nervures latérales, ledit système comprenant deux gouttières qui fournissent des rouleaux robustes (5), à la place des dispositifs de traction de film fixes standard, lesdits rouleaux (5) tournant à l'intérieur d'un support robuste approprié (7) placé en correspondance des gouttières, **caractérisé en ce que** le film (2) est enroulé autour d'un des deux rouleaux (5), et un filet anti-pucerons ou anti-grêle ou faisant de l'ombre (3), ou des bandes ou des fils de traction, sont enroulés autour de l'autre rouleau (5), ledit film et ledit filet ou lesdites bandes étant couplés l'un à l'autre le long de la serre par un élément coulissant sur des arceaux (4) entre les gouttières, la rotation des deux rouleaux (5) dans un premier sens enroulant le film (2) et déroulant le filet ou les bandes, ledit filet ou lesdites bandes remplaçant le film (2), et l'effet opposé se produisant par rotation dans le second sens.

2. Système d'ouverture et de fermeture complètes (1) d'un toit de serre métallique muni d'un recouvrement en film plastique (2) et/ou d'un filet anti-pucerons ou anti-grêle ou faisant de l'ombre (3) selon la revendication précédente, **caractérisé en ce qu'**il est actionné par un motoréducteur unique (9) aménagé à l'extrémité de l'un des deux rouleaux (5), les deux extrémités des rouleaux (5) sur l'autre tête faisant saillie de celui-ci de sorte qu'un fil métallique (12) puisse être enroulé ou déroulé, directement ou par des poulies, ledit fil métallique (12) transmettant le mouvement agissant conjointement avec le film et la bande ou le filet pour créer une chaîne ou une courroie de transmission, et **caractérisé en ce que** sa longueur peut être modifiée automatiquement, en maintenant toujours la tension requise, grâce au mouvement vertical d'un contrepoids, obtenu par de petites poulies, afin de compenser des irrégularités de rotation des deux rouleaux (5), ledit contrepoids étant éventuellement muni d'un crochet inférieur pour ajouter d'autres poids au cas où l'on souhaiterait une plus grande tension sur le film.

3. Système d'ouverture et de fermeture complètes (1) d'un toit de serre métallique muni d'un recouvrement en film plastique (2) et/ou d'un filet anti-pucerons ou anti-grêle ou faisant de l'ombre (3) selon la revendication précédente, **caractérisé en ce que** la variation de la longueur de transmission du fil métallique (12) est obtenue par un ressort (34) fixé sur la structure de la serre par une tige filetée qui, grâce à une poignée (38), peut augmenter ou réduire la contrainte par laquelle le fil métallique est maintenu sous tension, ajustant de la sorte la tension du recouvrement de toit de la serre, un autre modification de la tension du film étant possible en mettant en oeuvre un petit motoréducteur à la place de la poignée.

4. Système d'ouverture et de fermeture complètes d'un toit de serre métallique muni d'un recouvrement en film plastique et/ou d'un filet anti-pucerons ou anti-grêle ou faisant de l'ombre selon la revendication précédente, **caractérisé en ce que** la variation de la longueur de transmission du fil métallique est obtenue en plaçant un vérin à air comprimé ou un autre type de vérin ou encore un autre système maintenant la tension du fil métallique et permettant son allongement.

5. Système d'ouverture et de fermeture complètes d'un toit de serre métallique muni d'un recouvrement en film plastique et/ou d'un filet anti-pucerons ou anti-grêle ou faisant de l'ombre selon les revendications précédentes, **caractérisé en ce qu'**un second motoréducteur est aménagé pour des serres très longues sur l'extrémité opposée de cette serre par rapport au premier motoréducteur, en agissant toujours sur le même rouleau du premier motoréducteur.

6. Système d'ouverture et de fermeture complètes d'un toit de serre métallique muni d'un recouvrement en film plastique et/ou d'un filet anti-pucerons ou anti-grêle ou faisant de l'ombre selon les revendications précédentes, **caractérisé en ce que** des filets anti-grêle fixes ou un autre type de filet, ou des fils métalliques ou des tubes métalliques, ou des tubes constitués d'un matériau différent sont mis en oeuvre sur les extrémités des deux premiers arceaux, aménagés de sorte que le film ou le filet au-dessus de celui-ci puisse avoir le support nécessaire aux extrémités dans la direction longitudinale pendant son mouvement, et **en ce que** des filets fixes sont placés aux extrémités des deux premiers arceaux, au-dessus du film et/ou des filets mobiles, pour qu'ils soient toujours maintenus collés au toit de la serre même en présence de vent fort, leur coulissement étant toujours possible.

7. Système d'ouverture et de fermeture complètes d'un toit de serre métallique muni d'un recouvrement en film plastique et/ou d'un filet anti-pucerons ou anti-grêle ou faisant de l'ombre selon les revendications précédentes, **caractérisé en ce que** le film ou les filets ou les bandes sont reliés l'un(e) à l'autre par une barre de renforcement à section en U aménagée à l'intérieur sur les deux parties avec un dispositif de fixation en feuille standard tout le long de la serre afin de verrouiller le film et le filet et les bandes.

8. Système d'ouverture et de fermeture complètes d'un toit de serre métallique muni d'un recouvrement en film plastique et/ou d'un filet anti-pucerons ou anti-grêle ou faisant de l'ombre selon les revendications précédentes, **caractérisé en ce que** le film et le filet ou les bandes sont reliés l'un(e) à l'autre par simple collage obtenu par chauffage ou des colles spéciales.

9. Système d'ouverture et de fermeture complètes d'un toit de serre métallique muni d'un recouvrement en film plastique et/ou d'un filet anti-pucerons ou anti-grêle ou faisant de l'ombre selon les revendications précédentes, **caractérisé en ce qu'**une transmission de chaîne, ou un autre type de transmission, avec un rapport de réduction de consigne, est aménagée entre le rouleau d'entraînement et le motoréducteur, de manière à réduire la puissance du motoréducteur, mais en augmentant le temps de fonctionnement, et à pouvoir remplacer le motoréducteur avec une poignée permettant un fonctionnement manuel utile en cas de panne de secteur.

10. Système d'ouverture et de fermeture complètes d'un toit de serre métallique muni d'un recouvrement en film plastique et/ou d'un filet anti-pucerons ou anti-grêle ou faisant de l'ombre selon les revendications précédentes, **caractérisé en ce que**, hormis la poignée décrite dans la revendication 9, il est prévu une seconde poignée sur l'autre rouleau de gouttière, à la même extrémité ou à l'extrémité opposée, afin de pouvoir tendre le film beaucoup plus fortement, en présence de vent fort, à la fois dans le cas où l'autre rouleau alimente le motoréducteur et dans le cas uniquement où la transmission manuelle est mise en oeuvre.

11. Système d'ouverture et de fermeture complètes d'un toit de serre métallique muni d'un recouvrement en film plastique et/ou d'un filet anti-pucerons ou anti-grêle ou faisant de l'ombre selon les revendications précédentes, **caractérisé en ce que** deux autres rouleaux sont juxtaposés sur les deux rouleaux de gouttière, grâce à une structure mise en oeuvre au-dessus, ayant un fonctionnement indépendant, de manière à monter, par exemple, dans l'un d'entre eux, un second film et, dans l'autre, des bandes ou des fils métalliques de traction, ou vice versa, en réalisant ainsi un double recouvrement de serre, ou à monter une toile faisant de l'ombre sur un rouleau et des bandes ou des fils métalliques de traction sur l'autre rouleau, ou vice-versa, afin d'assurer un ombrage variable, à monter un film sur un rouleau et un filet faisant de l'ombre sur l'autre rouleau, ou vice versa, afin d'obtenir en même temps un film double et un ombrage variable.
